# EUROPÄISCHE PATENTSCHRIFT

(11) **EP 1 371 276 B1**
(45) Veröffentlichungstag und Bekanntmachung des Hinweises auf die Patenterteilung: **16.08.2006**
(21) Anmeldenummer: 03011510.9
(22) Anmeldetag: 21.05.2003
(51) Int. Cl.: A01D 34/81, B62D 25/10

(54) **Motorhaube für einen Rasenmäher**
Motor cover for lawnmower
Capot de moteur pour tondeuse à gazon

(30) Priorität: 13.06.2002 DE 20209153 U
(43) Veröffentlichungstag der Anmeldung: 17.12.2003
(73) Patentinhaber: Viking GmbH, 6336 Langkampfen-Kufstein (AT)
(72) Erfinder: Stefanescu, Liviu, 6330 Kufstein (AT)
(74) Vertreter: Wasmuth, Rolf

(56) Entgegenhaltungen:
- US-A- 4 037 682
- US-A- 5 193 636
- US-A- 5 782 312

## Beschreibung

Die Erfindung betrifft eine Motorhaube für einen Rasenmäher, insbesondere für einen Aufsitzmäher.

Aus der FR 2 679 103 ist ein Rasenmäher bekannt, der einen Verbrennungsmotor aufweist, der mit einer Haube abgedeckt ist. Zwischen der Haube und dem Unterteil des Gehäuses ist ein Spalt vorgesehen, der zur Belüftung dient.

Bei einem aus der US-A 5,782,312 bekannten Rasenmäher ist der Deckel der Motorhaube am Grundkörper der Motorhaube an deren Vorderseite schwenkbar gelagert. An der in Fahrtrichtung hinten liegenden Seite liegt der Deckel auf dem Gehäuse des Rasenmähers auf. Zwischen dem Deckel und dem Grundkörper ist an der in Fahrtrichtung vorne liegenden Seite der Motorhaube ein Lüftungsschlitz angeordnet.

Der Erfindung liegt die Aufgabe zugrunde, eine Motorhaube für einen Rasenmäher, insbesondere für einen Aufsitzmäher zu schaffen, die eine gute Belüftung des Motors bei einfacher Herstellbarkeit gewährleistet.

Diese Aufgabe wird durch eine Motorhaube mit den Merkmalen des Anspruchs 1 gelöst.

Erfindungsgemäß wird die Motorhaube selbst zweiteilig ausgebildet und der Lüftungsschlitz zwischen Deckel und Grundkörper der Motorhaube vorgesehen. Der Lüftungsschlitz verläuft dabei mindestens teilweise umlaufend zwischen Grundkörper und Deckel. Die Motorhaube selbst kann so in üblicher Weise am Rasenmäher, insbesondere an einem Aufsitzmäher, fixiert werden. Der Lüftungsschlitz selbst wird räumlich getrennt vom Übergang zwischen Gehäuse und Motorhaube zwischen dem Grundkörper der Motorhaube und dem Deckel der Motorhaube angeordnet. Da die zur Fixierung des Deckels benötigten Kräfte geringer sind als die zur Fixierung der gesamten Haube, kann der Lüftungsschlitz mindestens teilweise umlaufend verlaufen. Durch die Zuführung der Kühlluft aus dem Bereich des Deckels ergibt sich eine vorteilhafte Luftführung.

Zweckmäßig besitzt der Lüftungsschlitz in Draufsicht auf die Motorhaube eine etwa U-förmige Gestalt. Insbesondere erstreckt sich der Lüftungsschlitz vom Frontbereich der Motorhaube aus umlaufend. Im Frontbereich der Motorhaube kann so der Deckel am Grundkörper fixiert werden. Gleichzeitig ist dadurch, daß der Lüftungsschlitz entgegen der Fahrtrichtung angeordnet ist, die Gefahr des Ansaugens von Verunreinigungen mit der Kühlluft vermindert. Es ergibt sich außerdem eine gute Stabilität der Motorhaube im Frontbereich.

Vorteilhaft ist der Lüftungsschlitz durch einen Deckelrand des Deckels begrenzt, wobei zur ausreichenden Versorgung des Motors mit Kühlluft vorgesehen ist, daß der Lüftungsschlitz eine Länge aufweist, die 30% bis 90%, insbesondere 75% bis 85% der Länge des Deckelrandes beträgt. Insbesondere übergreift der Deckelrand des Deckels den Grundkörper. Der Lüftungsschlitz wird dadurch vom Deckelrand in Richtung nach oben abgedeckt. Vorteilhaft weist der Grundkörper im Bereich des Lüftungsschlitzes einen Absatz auf. Zweckmäßig ist der Deckelrand im Bereich des Absatzes angeordnet, so daß sich eine weitgehend glatte Außenoberfläche und damit ein angenehmes Erscheinungsbild ergibt. Der Absatz führt gleichzeitig zu einer Umlenkung des Luftstromes, der durch den Lüftungsschlitz strömt und damit zu einer vorteilhaften Strömung im Inneren der Motorhaube. Eine einfache Herstellbarkeit ergibt sich, wenn der Deckel in Draufsicht gesehen den Grundkörper weitgehend abdeckt. Die Bezeichnung Draufsicht bezieht sich dabei auf die normale Einbaulage der Motorhaube. Die Motorhaube wird somit in normaler Einbaulage in Richtung nach oben hauptsächlich durch den Deckel begrenzt. Dadurch ergibt sich eine vorteilhafte Herstellbarkeit der Motorhaube. Gleichzeitig kann der Lüftungsschlitz dadurch vergleichsweise lang ausgebildet werden, so daß eine ausreichende Belüftung erreicht wird.

Weitere Merkmale ergeben sch aus der Beschreibung und der Zeichnung, in der ein Ausführungsbeispiel der Erfindung dargestellt ist. Es zeigen:
- Fig. 1: eine perspektivische Ansicht einer Motorhaube,
- Fig. 2: eine Seitenansicht der Motorhaube aus Fig. 1 in normaler Einbaulage der Motorhaube,
- Fig. 3: eine Draufsicht auf die Motorhaube aus Fig. 1,
- Fig. 4: eine Vorderansicht der Motorhaube aus Fig. 1.

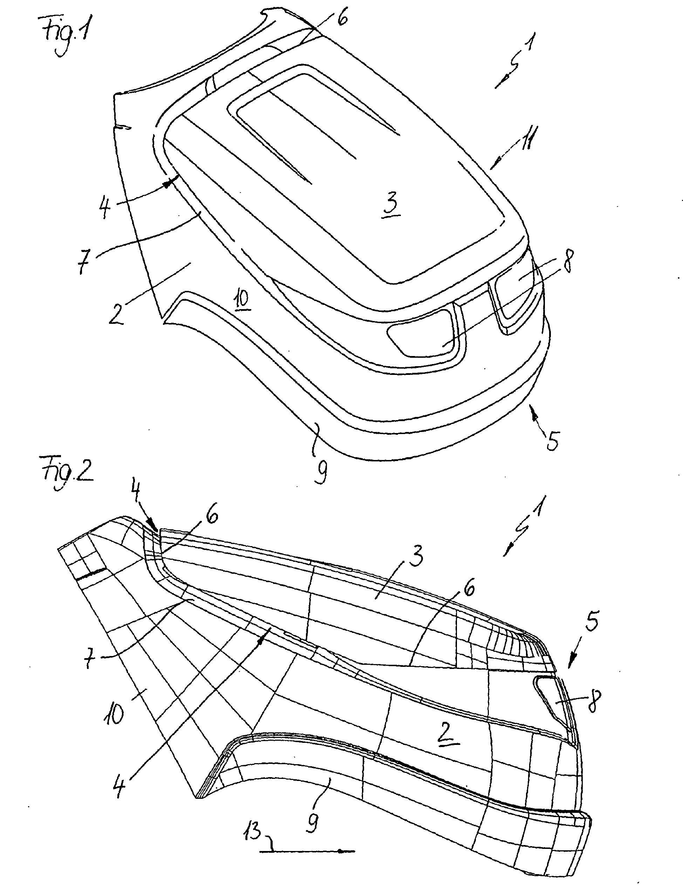

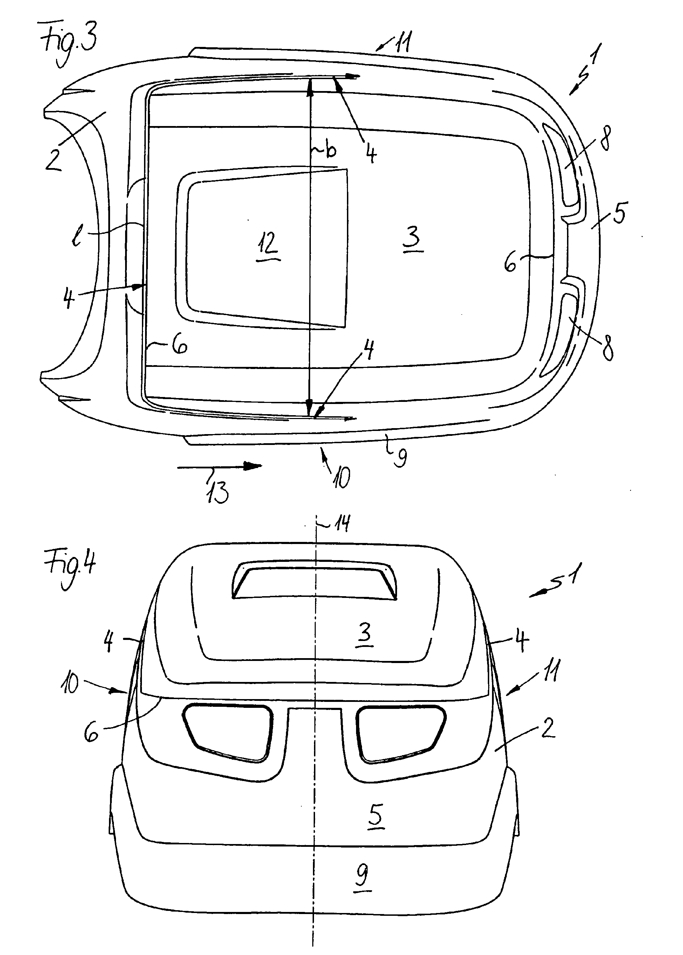

In Fig. 1 ist eine Motorhaube für einen Aufsitzmäher dargestellt. Die Motorhaube ist im wesentlichen zweiteilig ausgebildet und besteht aus einem Grundkörper 2, auf den ein Deckel 3 aufgesetzt ist. Im Frontbereich 5 der Motorhaube 1 sind in den Grundkörper 2 zwei Scheinwerfer 8 integriert. Der Frontbereich 5 der Motorhaube 1 ist der in Fahrtrichtung des Aufsitzmähers nach vorne weisende Bereich. An dem in normaler Einbaulage nach unten weisenden Bereich des Grundkörpers 2 ist ein Grundkörperrand 9 angeformt, der gegenüber dem Grundkörper 2 nach außen gewölbt ausgebildet ist. Der Grundkörperrand 9 weist in der in Fig. 3 dargestellten Draufsicht etwa U-förmige Gestalt auf und erstreckt sich vom Frontbereich 5 aus nach beiden Seiten des Grundkörpers 2. Der Deckel 3 weist einen umlaufenden Deckelrand 6 auf. Zwischen dem Deckelrand 6 und dem Grundkörper 2 ist ein Lüftungsschlitz 4 ausgebildet, der sich über einen Teil der Seiten 10 und 11 sowie über die quer zur Fahrtrichtung liegende Breite b des Deckels 3 erstreckt (Fig. 3).

In Fig. 2 ist die Motorhaube 1 in Seitenansicht dargestellt, wobei zur Verdeutlichung Höhenlinien dargestellt sind, die die räumliche Gestalt der Motorhaube 1 verdeutlichen. Im Frontbereich 5 schließt der Deckel 3 direkt an den Grundkörper 2 der Motorhaube 1 an. Der Deckel 3 ist dabei heruntergezogen ausgebildet, so daß der Deckel 3 etwa tangential in den Grundkörper 2 übergeht. Der Deckelrand 6 verläuft im Frontbereich 5 sowie in dem daran anschließenden Bereich der Seiten 10 und 11 etwa horizontal. Im hinteren Bereich der Seiten 10 und 11 verläuft der Deckelrand 6 zur Horizontalen geneigt, wobei er entgegen der Fahrtrichtung 13 nach oben verläuft. Der Deckelrand 6 übergreift den Grundkörper 2, der in diesem Bereich einen Absatz 7 aufweist. Der Deckel 3 ist heruntergezogen ausgebildet und geht, wie insbesondere aus der Vorderansicht in Fig. 4 ersichtlich, etwa tangential in den Grundkörper 2 über. Zwischen dem Deckelrand 6 und dem Grundkörper 2 ist dabei ein Lüftungsschlitz 4 gebildet.

In dem in Fahrtrichtung hinten liegenden Bereich ist der Deckel 3 weitgehend eben ausgebildet und oberhalb des Absatzes 7 im Grundkörper 2 angeordnet. Der Lüftungsschlitz 4 verläuft in diesem Bereich im Querschnitt etwa horizontal, so daß die Strömungsrichtung der durch den Lüftungsschlitz strömenden Luft etwa horizontal verläuft, während an den Seiten 10 und 11 der Lüftungsschlitz 4 im Querschnitt etwa senkrecht verläuft.

In Fig. 3 ist die Motorhaube 1 in Draufsicht dargestellt. Der Lüftungsschlitz 4 verläuft vom Frontbereich 5 aus etwa U-förmig und besitzt eine Länge 1, die 30% bis 90%, insbesondere 75% bis 85% der Länge des Deckelrands 6 beträgt. Der Deckel 3 deckt den Grundkörper 2 in Draufsicht gesehen weitgehend ab. Der Grundriß des Grundkörpers 2 ist somit nur geringfügig größer als der Grundriß des Deckels 3. Der zwischen Deckel 3 und Grundkörper 2 ausgebildete Lüftungsschlitz 4 weist somit eine große Länge 1 auf. Im Deckel 3 ist eine Vertiefung 12 angeordnet, die sich etwa von der Mitte des Deckels 3 in Fahrtrichtung 13 nach hinten erstreckt. Der Boden der Vertiefung 12 verläuft in Fahrtrichtung 13 gesehen flacher als der die Vertiefung 12 umgebende Bereich des Deckels 3. Die Vertiefung 12 erstreckt sich nur über einen Teil der Breite b des Deckels 3, während der Lüftungsschlitz 4 sich in dem in Fahrtrichtung 13 hinten liegenden Bereich über die gesamte Breite b des Deckels 3 erstreckt.

In Fig. 4 ist die Motorhaube 1 in Vorderansicht dargestellt. Die Motorhaube ist etwa symmetrisch zu einer Mittellinie 14 ausgebildet. Die in Fahrtrichtung 13 rechts liegende Seite 10 sowie die in Fahrtrichtung links liegende Seite 11 sind jeweils gewölbt ausgebildet, wobei Grundkörper 2 und Deckel 3 tangential ineinander übergehen. Die Seiten 10 und 11 verlaufen dabei in Richtung nach oben aufeinander zu.

Eine erfindungsgemäße Motorhaube kann zweckmäßig auch bei geschobenen Rasenmähern eingesetzt werden.

## Patentansprüche

1. Motorhaube für einen Rasenmäher, insbesondere für einen Aufsitzmäher,
**dadurch gekennzeichnet, daß** die Motorhaube (1) einen Grundkörper (2) und einen Deckel (3) aufweist und zwischen Deckel (3) und Grundkörper (2) ein Lüftungsschlitz (4) ausgebildet ist, der von Deckel (3) und Grundkörper (2) begrenzt wird und der sich vom Frontbereich (5) der Motorhaube (1) aus über einen Teil der Seiten (10, 11) sowie über die quer zur Fahrtrichtung liegenden Breite (b) des hinten liegenden Bereichs des Deckels (3) umlaufend erstreckt.

2. Motorhaube nach Anspruch 1,
**dadurch gekennzeichnet, daß** der Lüftungsschlitz (4) in Draufsicht auf die Motorhaube (1) gesehen eine etwa U-förmige Gestalt besitzt.

3. Motorhaube nach Anspruch 1 oder 2,
**dadurch gekennzeichnet, daß** der Lüftungsschlitz (4) durch einen Deckelrand (6) des Deckels (3) begrenzt ist, wobei der Lüftungsschlitz (4) eine Länge (1) aufweist, die 30% bis 90%, insbesondere 75% bis 85% der Länge des Deckelrandes (6) beträgt.

4. Motorhaube nach einem der Ansprüche 1 bis 3,
**dadurch gekennzeichnet, daß** der Deckelrand (6) des Deckels (3) den Grundkörper (2) übergreift.

5. Motorhaube nach einem der Ansprüche 1 bis 4,
**dadurch gekennzeichnet, daß** der Grundkörper (2) im Bereich des Lüftungsschlitzes (4) einen Absatz (7) aufweist.

6. Motorhaube nach einem der Ansprüche 1 bis 5,
**dadurch gekennzeichnet, daß** der Deckel (3) in Draufsicht gesehen den Grundkörper (2) weitgehend abdeckt.

## Claims

1. Motor hood for a lawnmower, in particular for a sit-on mower,
**characterised in that** the motor hood (1) has a base body (2) and a cover (3), and a venting slot (4) is provided between the cover (3) and the base body (2) which is bounded by the cover (3) and base body (2), and which extends out from the front region (5) of the motor hood (1) across a part of the sides (10, 11) as well as peripherally across the width (b) of the rearwardly lying region of the cover (3) lying transversely to the travel direction.

2. Motor hood as claimed in claim 1,
**characterised in that** the venting slot (4) has an approximately U-shaped contour as seen in a plan view onto the motor hood (1).

3. Motor hood as claimed in claim 1 or 2,
**characterised in that** the venting slot (4) is bounded by a cover edge (6) of the cover (3), and the venting slot (4) has a length (1) which is 30% to 90%, in particular 75% to 85% of the length of the cover edge (6).

4. Motor hood as claimed in one of claims 1 to 3,
**characterised in that** the cover edge (6) of the cover (3) extends beyond the base body (2).

5. Motor hood as claimed in one of claims 1 to 4,
**characterised in that** the base body (2) has a shoulder (7) in the region of the venting slot (4).

6. Motor hood as claimed in one of claims 1 to 5,
**characterised in that** the cover (3) substantially covers the base body (2) as seen in plan view.

## Revendications

1. Capot moteur pour une tondeuse à gazon, en particulier pour une tondeuse à gazon autoportée, **caractérisé en ce que** le capot moteur (1) présente un corps de base (2) et un couvercle (3) et entre le couvercle (3) et le corps de base (2) est réalisée une fente d'aération (4), qui est délimitée par le couvercle (3) et le corps de base (2) et s'étend depuis la zone avant (5) du capot moteur (1) de façon périphérique sur une partie des côtés (10, 11) ainsi que sur la largeur (b), située transversale au sens de marche, de la zone disposée à l'arrière du couvercle (3).

2. Capot moteur selon la revendication 1,
**caractérisé en ce que** la fente d'aération (4) présenté une silhouette à peu près en forme de U en vue de dessus vers le capot moteur (1).

3. Capot moteur selon la revendication 1 ou 2, **caractérisé en ce que** la fente d'aération (4) est délimitée par un bord (6) du couvercle (3), la fente d'aération (4) présentant une longueur (1) qui représente 30 % à 90 %, en particulier 75 % à 85 % de la longueur du bord de couvercle (6).

4. Capot moteur selon l'une quelconque des revendications 1 à 3, **caractérisé en ce que** le bord (6) du couvercle (3) recouvre le corps de base (2).

5. Capot moteur selon l'une quelconque des revendications 1 à 4, **caractérisé en ce que** le corps de base (2) présente un décrochement (7) dans la zone de la fente d'aération (4).

6. Capot moteur selon l'une quelconque des revendications 1 à 5, **caractérisé en ce que** le couvercle (3) masque largement le corps de base (2) en vue de dessus.
